(19) Europäisches Patentamt
European Patent Office
Office européen des brevets

(11) **EP 3 529 862 B1**

(12) **EUROPÄISCHE PATENTSCHRIFT**

(45) Veröffentlichungstag und Bekanntmachung des Hinweises auf die Patenterteilung:
**25.11.2020   Patentblatt 2020/48**

(21) Anmeldenummer: **16785433.0**

(22) Anmeldetag: **20.10.2016**

(51) Int Cl.:
***H01Q 19/06*** *(2006.01)*      ***G01S 13/95*** *(2006.01)*

(86) Internationale Anmeldenummer:
**PCT/EP2016/075157**

(87) Internationale Veröffentlichungsnummer:
**WO 2018/072826 (26.04.2018 Gazette 2018/17)**

(54) **VORRICHTUNG UND VERFAHREN ZUR NIEDERSCHLAGSMESSUNG**

APPARATUS AND METHOD FOR MEASURING PRECIPITATION

DISPOSITIF ET PROCÉDÉ DE MESURE DE PRÉCIPITATIONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.08.2019   Patentblatt 2019/35**

(73) Patentinhaber: **G. Lufft Mess- und Regeltechnik GmbH**
**70736 Fellbach-Schmiden (DE)**

(72) Erfinder:
• **SCHMITZ-HÜBSCH, Axel**
**71686 Remseck (DE)**
• **TONNIER, Matthias**
**70435 Stuttgart (DE)**

(74) Vertreter: **Sandri, Sandro**
**Bugnion S.P.A.**
**Via Pancaldo 68**
**37138 Verona (IT)**

(56) Entgegenhaltungen:
**WO-A1-2007/074943      WO-A1-2013/055272**
**US-A1- 2005 093 738**

• **Matthew James Kemp: "A FM-CW microwave radar for rainfall applications", Master Thesis, 31. Mai 2012 (2012-05-31), XP055385708, Gefunden im Internet: URL:http://ir.uiowa.edu/cgi/viewcontent.cg i?article=3061&context=etd [gefunden am 2017-06-27]**
• **MANSHEIM T J ET AL: "A Robust Microwave Rain Gauge", IEEE TRANSACTIONS ON INSTRUMENTATION AND MEASUREMENT, IEEE SERVICE CENTER, PISCATAWAY, NJ, US, Bd. 59, Nr. 8, 1. August 2010 (2010-08-01) , Seiten 2204-2210, XP011296747, ISSN: 0018-9456**

**Beschreibung**

**Gebiet der Erfindung**

Die Erfindung betrifft eine Vorrichtung und ein Verfahren zur Niederschlagsmessung.

**Stand der Technik**

Derzeitige Radarniederschlagssensoren sind nach dem Prinzip eines Dopplerradars mit einem getrennten Sende- und Empfangspfad aufgebaut. In den sogenannten bistatischen Radarsystemen werden elektromagnetische Wellen im Radiofrequenzbereich gebündelt als sog. Primärsignal mittels einer ersten Antenne ausgesendet. Die von Objekten reflektierten Echos werden anschließend als Sekundärsignal von einer räumlich von der ersten Antenne getrennten zweiten Antenne empfangen. Aus der Verschiebung der Frequenz des reflektierten Signals aufgrund des Dopplereffekts kann anschließend die Relativbewegung zwischen dem Sender/Empfängersystem und den Objekten berechnet werden.

Bei der Niederschlagsmessung werden mit Hilfe eines solchen Dopplerradars die Geschwindigkeiten von Regentropfen gemessen. Da zwischen der Geschwindigkeit und dem Durchmesser der Regentropfen ein fester Zusammenhang, d. h. eine positive Korrelation, besteht, kann aus der gemessenen Geschwindigkeit auf den Durchmesser und das Volumen eines Tropfens geschlossen werden. Durch Signalauswertungen kann außerdem erkannt werden, ob ein Tropfen auf das Radom des Radars aufschlägt oder ob er daran vorbeifliegt. Werden alle Tropfen mit ihrem dazugehörigen Volumen gezählt, die auf das Radom aufschlagen, kann eine Niederschlagsmenge bestimmt werden, die bezogen auf die Referenzfläche des Radoms gefallen ist.

Diverse Radarsensoren und Radarniederschlagssensoren sind unter anderem aus den folgenden Dokumenten bekannt.

Aus der WO 2007/074943 ist eine elektromagnetische Linsenvorrichtung bekannt, die eine elektromagnetische Linse zum Senden, eine elektromagnetische Linse zum Empfangen, zwei Primärstrahler, die sich jeweils an einem Brennpunkt einer der elektromagnetischen Linsen befinden, an Arm, der die Primärstrahler und einen Tisch hält, umfasst.

WO 2013/055272 offenbart eine Leiterplatte für ein Radarsystem zur Nahbereichserkennung von Objekten mit einer zum Aussenden von Strahlung angeordneten Mikrostreifen-Patch-Array-Sendeantenne und einer Mikrostreifen-Patch-Array-Empfangsantenne zum Empfang von Strahlung und Elektronik zur Radar- und Signalverarbeitung.

Die US 2005/093738 betrifft ein in einen Ein-Chip-MMIC integrierter Radarsensor, in dem eine aktive Schaltung mit einem Oszillator und einem Mischer mit einer Antenne auf einem Halbleitersubstrat ausgebildet ist. Ferner ist der MM IC mit einer Harzpackung versiegelt. Über der Antenne ist eine dielektrische Linse auf dem Harzgehäuse ausgebildet, um eine gewünschte Strahlbreite zu erreichen.

Die jeweilige Veröffentlichungen Matthew James Kemp, "A FM-CW microwaveradar for rainfall applications", Master Thesis, (20120531), URL: http://ir.uiowa.edu/cqi/viewcontent.cqi und MANSHEIM T J ET AL. "A Robust Microwave Rain Gauge", IEEE TRANSACTIONS ON INSTRUMENTATION AND MEASUREMENT. IEEE SERVICE CENTER, PISCATAWAY, NJ, US, (20100801), vol. 59, no. 8, ISSN 0018-9456. pages 2204 - 2210,XP011296747 betreffen verschiedene Anwendungen eines Mikrowellenradars zur Niederschlagsmessung.

Die im Stand der Technik bekannten bistatischen Radarniederschlagssensoren weisen eine Reihe von Nachteilen auf.

Aufgrund des kleinen Radarquerschnitts von Regentropfen müssen die Antennen dicht unter der Radomoberfläche platziert werden, um den Abstand zum Regentropfen möglichst klein zu halten. Gleichzeitig benötigen die Antennen einen großen Öffnungswinkel, beispielsweise 40° x 60°, um einen möglichst großen Teil des Radoms im Sichtbereich zu haben. Damit wird sichergestellt, dass die Stichprobenmenge der erkannten aufgeschlagenen Regentropfen hinreichend groß ist, um auf die Gesamtniederschlagsmenge und -intensität schließen zu können. Schlägt ein Tropfen am Rand des Radoms auf, so reduziert sich die gemessene Geschwindigkeit $V_{gemessen}$ auf den Wert

$$v_{gemessen} = v_{Tropfen}\frac{1}{2}\left(\cos\alpha_{TX} + \cos\alpha_{RX}\right) \qquad (1)$$

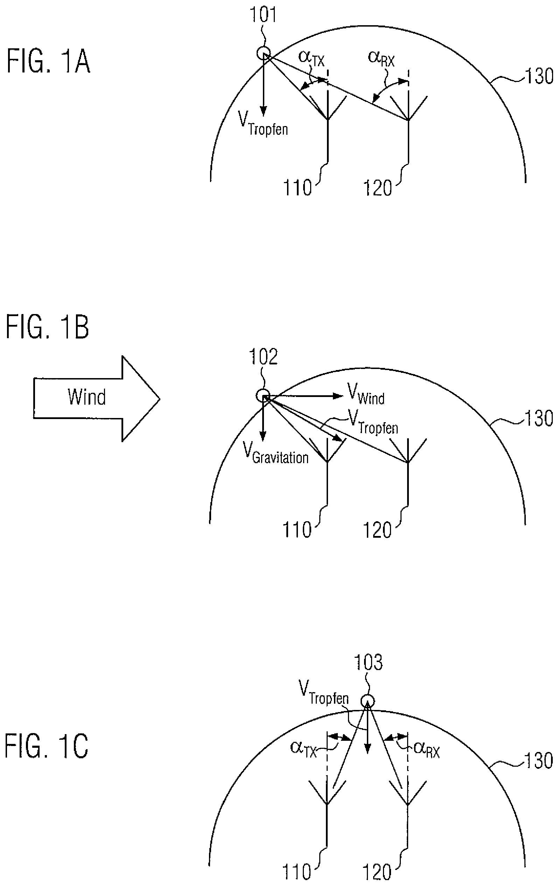

Die entsprechende Situation ist in Figur 1a dargestellt. Die Figur zeigt eine Sendeantenne 110 und eine Empfangsantenne 120 eines Radarniederschlagssensors, welche gemeinsam dicht unter der Oberfläche des Radoms 130 angeordnet sind. Die Figur 1a zeigt weiterhin einen Regentropfen 101, der mit der Geschwindigkeit $v_{Tropfen}$ auf den Rand des Radoms 130 aufschlägt. Das von der Sendeantenne 110 ausgesendete Radarprimärsignal erfasst den Tropfen 101 unter einen Winkel $\alpha_{TX}$ zur Bewegungsrichtung des Tropfens 101. Das reflektierte Sekundärsignal (Echo) wird von der Empfangsantenne 120 unter dem Winkel $\alpha_{RX}$ zur Bewegungsrichtung des Tropfens 101 empfangen. Da beide

2

Winkel größer als 0° sind, ist die gemessene Geschwindigkeit $v_{gemessen}$ gemäß Formel 1 geringer als die tatsächliche Geschwindigkeit $v_{Tropfen}$ des Regentropfens 101.

Das bistatische Niederschlagsradar mit getrennten Sende- und Empfangsantennen führt zudem unter Windeinfluss zu verfälschten Messungen der Tropfengeschwindigkeit. Die Korrelation von Tropfengeschwindigkeit und Tropfendurchmesser entsteht aus einer Kombination von Gravitationskraft und Strömungswiderstand des Tropfens. Regentropfen können allgemein neben der Beschleunigung durch die Gravitation auch durch den Einfluss von Winden beschleunigt werden, so wie es in der Figur 1b gezeigt ist. Wird ein Tropfen durch Windeinfluss derart beschleunigt, dass er schräg auf die Antennen zufliegt, so wird die Überlagerung der beiden Geschwindigkeiten gemessen. Der in der Figur 1b gezeigte Regentropfen 102 wurde beispielsweise durch den Wind auf die horizontale Geschwindigkeit $v_{Wind}$ beschleunigt, während er durch die Gravitation auf die senkrechte Geschwindigkeit $v_{Gravitation}$ beschleunigt wurde. Aus der Überlagerung dieser beiden Geschwindigkeiten ergibt sich die Geschwindigkeit des Tropfens $v_{Tropfen}$, mit der der Regentropfen 102 auf die Oberfläche des Radoms 130 aufschlägt. Die resultierende Geschwindigkeit ist somit größer als die durch die Gravitation verursachte Geschwindigkeit. Als Ergebnis ist auch die gemessene Geschwindigkeit im Allgemeinen größer als die durch die Gravitation verursachte Geschwindigkeit, sodass fälschlicherweise auf einen zu großen Regentropfen geschlossen wird. Daher wird auch die Niederschlagsmenge unter Windeinfluss überschätzt.

Wie in Formel 1 gezeigt ergibt sich durch die getrennten Sende- und Empfangspfade eine bistatische Doppelverschiebung. Dadurch wird die Geschwindigkeit des Regentropfens als zu gering gemessen, selbst wenn der Tropfen 103, wie in Figur 1c gezeigt, in der Mitte des Radoms 130 aufschlägt. Der Effekt ist nicht vernachlässigbar klein, da der Abstand von Sende- und Empfangsantennen nicht vernachlässigbar klein gegenüber dem Abstand von Regentropfen zur jeweiligen Antenne ist. Die gemessene Geschwindigkeit reduziert sich wie in Formel 1 gezeigt auf einen Wert, der kleiner als die tatsächliche Geschwindigkeit $v_{Tropfen}$ des Regentropfens 103 ist.

Angesichts dieser Probleme im Stand der Technik ist es eine Aufgabe der vorliegenden Erfindung, eine Vorrichtung und ein Verfahren zur Niederschlagsmessung mittels Radar zur Verfügung zu stellen, welche die tatsächliche Niederschlagsmenge mit hoher Präzision messen. Darüber hinaus soll die Vorrichtung ein gutes Signal-Rausch-Verhältnis aufweisen und kompakt ausgebildet sein.

## Beschreibung der Erfindung

Die oben genannten Aufgaben werden gelöst durch eine Vorrichtung zur Niederschlagsmessung mittels Radar nach einem der Ansprüche 1-5. Anders als die oben beschriebenen bistatischen Radare des Stands der Technik handelt es sich bei der vorliegenden Erfindung um ein monostatisches Niederschlagsradar, bei dem dieselbe Antenne sowohl zum Senden der Radarwellen, d. h. der Primärsignale, als auch zum Empfangen der reflektierten Radarwellen, d. h. der Sekundärsignale, verwendet wird. Die Vorrichtung kann insbesondere genau eine Antenne aufweisen, welche somit gleichzeitig als Sende- und Empfangsantenne dient.

Sende- und Empfangsantennen für Radarwellen sind im Stand der Technik wohl bekannt und werden daher hier nicht eingehend beschrieben. Es sei lediglich erwähnt, dass die Antenne mit einem ausreichend großen Öffnungswinkel ausgebildet sein kann um einen für die Niederschlagsmessung ausreichend großen Teil des Radoms im Sichtbereich zu haben. Um eine Reflexion der ausgesendeten Primärsignale an Regentropfen zu erzielen, kann die Antenne zum Aussenden und Empfangen von Radiowellen entsprechend geeigneter Frequenzen dimensioniert sein. Beispielsweise kann die Antenne derart ausgebildet sein, dass sie Radiowellen mit einer Frequenz im NATO K-Band, beispielsweise 24 GHz, im NATO J-Band oder NATO L-Band aussenden und empfangen kann. Die Antennendimensionen liegen dabei im Zentimeter- bzw. Subzentimeter-Bereich.

Erfindungsgemäß ist in Abstrahlrichtung vor der Antenne eine dielektrische Linse angeordnet, wobei die Antenne derart zur dielektrischen Linse ausgerichtet ist, dass von der Antenne abgestrahlte Radarwellen durch die dielektrische Linse hindurchtreten. Insbesondere kann die Antenne derart zur dielektrischen Linse ausgerichtet und von dieser beabstandet sein, dass die von der Antenne abgestrahlten Radarwellen im Wesentlichen, d. h. bis auf Fertigungstoleranzen, vollständig auf die dielektrische Linse treffen. Dies kann beispielsweise durch Anordnung eines konischen Rundhohlleiters zwischen Antenne und dielektrischer Linse erzielt werden. Es kann jedoch auch ein Teil der abgestrahlten Radarwellen an der dielektrischen Linse vorbei abgestrahlt werden. Durch die Verwendung einer einzigen Antenne zum Senden und Empfangen der Radarwellen erhält man einen gemeinsamen Sende- und Empfangspfad des Radarsystems. Insbesondere wird der Unterschied zwischen den Sichtwinkeln, unter denen ein Regentropfen bezüglich getrennter Sende- und Empfangsantennen auf das Radom aufschlägt, eliminiert. Die sich ergebende Dopplerverschiebung ist somit eine monostatische Dopplerverschiebung, welche die oben beschriebene Reduktion der gemessenen Geschwindigkeit der bistatischen Dopplerverschiebung vermeidet.

Bei einer dielektrischen Linse werden auf die dielektrische Linse auftreffende parallele Radiowellen, äquivalent zur Brechung optischer Linsen, in einem Punkt, dem Brennpunkt fokussiert. Das Material der dielektrischen Linse kann dabei entsprechend der Verwendung für die oben genannten Radarwellen gewählt werden. Für das dielektrische Material, das die dielektrische Linse bildet, kann Harz, Keramik, ein Harz-Keramik-Verbundmaterial, ein künstliches dielektrisches Material mit Metall, das zyklisch in demselben angeordnet ist, ein Photonenkristall und andere Materialien, die eine andere spezifische Dielektrizitätskonstante als 1 aufweisen, eingesetzt werden. Bei einer Radiofrequenz von 24 GHz kann beispielsweise eine dielektrische Linse mit einer relativen Dielektrizitätskonstante von 3,11 und einem Verlustfaktor von 0,0015 eingesetzt werden. Bevorzugt kann die dielektrische Linse aus einem für die verwendeten Radarwellen annähernd verlustfreien dielektrischen Material ausgebildet sein.

Die dielektrische Linse ist derart ausgebildet und relativ zur Antenne ausgerichtet, dass von der Antenne abgestrahlte Wellenfronten bei Durchtritt durch die dielektrische Linse in im Wesentlichen ebene Wellenfronten umgeformt werden. Dies kann durch geeignete Wahl der Form und/oder Variation der Dielektrizitätskonstante der dielektrischen Linse erreicht werden. Beispielsweise kann es sich bei der dielektrischen Linse um eine konvex ausgebildete Linse mit einer innerhalb der Linse konstanten Dielektrizitätskonstante handeln. Die Dielektrizitätskonstante kann jedoch auch in Abhängigkeit von einem radialen Abstand von der (optischen) Achse der Linse variieren. Dies kann auch bei anderen als der konvexen Form derart geschehen, dass von der Antenne abgestrahlte sphärische Wellenfronten beim Durchtritt durch die dielektrische Linse in im Wesentlichen ebene Wellenfronten umgeformt werden. Hierbei ist unter einer im Wesentlichen ebenen Wellenfront eine solche Wellenfront zu verstehen, entlang deren Ausdehnung die Richtung des Wellenvektors um weniger als 10° variiert. Die dielektrische Linse kann insbesondere rotationssymmetrisch um ihre optische Achse ausgebildet sein, wobei jedoch auch asymmetrische Formen denkbar sind, die einem asymmetrischen Abstrahlwinkel der Antenne Rechnung tragen. Des Weiteren kann die dielektrische Linse als Zonenlinse ausgebildet sein, die ähnlich einer Fresnel-Zonenplatte Zonen unterschiedlicher Weglängen konzentrisch um die optische Achse der Linse anordnet. Entscheidend ist lediglich, dass die dielektrische Linse wenigstens eine die Radarwellen brechende Linsenfläche aufweist und derart ausgebildet und zur Antenne angeordnet ist, dass von der Antenne abgestrahlte sphärische Wellenfronten beim Durchtritt durch die dielektrische Linse in ebene Wellenfronten umgeformt werden.

Gemäß einer weiteren Weiterbildung kann die Antenne in einem Brennpunkt der dielektrischen Linse angeordnet sein, wobei die Antenne derart ausgerichtet ist, dass sie in Richtung der dielektrischen Linse abstrahlt. Insbesondere kann eine zentrale Achse bzw. Symmetrieachse der Abstrahlcharakteristik der Antenne in Richtung der optischen Achse der dielektrischen Linse ausgerichtet sein. In diesem Fall werden von der Antenne abgestrahlte, sphärische Wellenfronten beim Durchtritt durch die dielektrische Linse in ebene Wellenfronten umgeformt, welche nach dem Durchtritt durch die dielektrische Linse parallel zu den Hauptebenen der Linse verlaufen und sich in orthogonaler Richtung dazu, entlang der optischen Achse der dielektrischen Linse, ausbreiten.

Die dielektrische Linse bewirkt somit eine Fokussierung der von den Regentropfen zurückgeworfenen Radarwellen. Dabei werden auch Radarwellen, die von weiter entfernten Regentropfen reflektiert werden, ausreichend auf die Antenne fokussiert, sodass sich ein gutes Signal-Rausch-Verhältnis ergibt. Darüber hinaus bewirkt die Ausbreitung der emittierten Radarwellen in Form ebener Wellenfronten nach Durchtritt durch die dielektrische Linse, dass die Dopplerverschiebung durch Rückstreuung von den Regentropfen nunmehr unabhängig von dem Winkel gemessen wird, unter dem die Regentropfen bezüglich der Antenne auf das Radom auftreffen. Der Einfluss dieses Sichtwinkels auf die gemessene Geschwindigkeit kann somit auf einfache Weise eliminiert werden.

Alternativ kann zwischen der Antenne und der dielektrischen Linse ein Rundhohlleiter angeordnet sein, der dazu ausgebildet ist, die Radarwellen zwischen Antenne und Linse zu leiten. Insbesondere kann der Rundhohlleiter an seinem antennenfernen Ende in direktem Kontakt mit der dielektrischen Linse stehen, die beispielsweise halbkonvex ausgebildet sein kann, um ein optimales Einkoppeln der abgestrahlten Radarwellen in die dielektrische Linse zu garantieren. Der Rundhohlleiter kann dabei einen dem Linsendurchmesser entsprechenden Durchmesser aufweisen. Die antennenseitige Öffnung des Rundhohlleiters ist derart zur Antenne ausgerichtet, dass die abgestrahlte Leistung im Wesentlichen in den Rundhohlleiter eingekoppelt wird.

Bei Verwendung eines Rundhohlleiters kann auf die oben beschriebene Anordnung der Antenne bzgl. der optischen Achse der dielektrischen Linse verzichtet werden, sodass die Form der Vorrichtung flexibel den jeweiligen Anforderungen angepasst werden kann.

Die Antenne ist als Patchantenne ausgebildet Eine solche Patchantenne kann als einzelne Patchantenne in Form einer rechteckigen Metallfläche ausgebildet sein, deren Längsseite eine Länge aufweist, die der halben Wellenlänge der verwendeten Radarwellen entspricht. Mit einer einzelnen Patchantenne, die insbesondere senkrecht zur optischen Achse der dielektrischen Linse ausgerichtet sein kann, lassen sich auf äußerst kompakte Weise Radarwellen abstrahlen und empfangen. Wie oben beschrieben kann die Patchantenne dabei, insbesondere mit ihrem geometrischen Mittelpunkt, in einem Brennpunkt der dielektrischen Linse angeordnet sein. Alternativ kann ein 1x2 Patch-Array verwendet werden, da dieses rotationssymmetrisch einen 90° Öffnungswinkel besitzt. Die mit einem 1x2 Patch-Array ausgebildete Antenne kann mit ihrem Antennenschwerpunkt im Fokus der dielektrischen Linse platziert werden. Der Antennenschwerpunkt ist dabei als Schwerpunkt des emittierten Poynting-Flusses definiert und entspricht in diesem Fall nicht dem geometrischen Mittelpunkt, sondern ist leicht verschoben. Die Patchantenne kann insbesondere derart von der dielektrischen Linse beabstandet sein, dass die von der Patchantenne abgestrahlten, sphärischen Wellenfronten im Wesentlichen vollständig auf die dielektrische Linse treffen.

Die Vorrichtung umfasst ein Radom, welches auf der antennenfernen Seite der dielektrischen Linse angeordnet ist und die dielektrische Linse teilweise umhüllt. Das Radom kann beispielsweise in Form einer hohlen Halbkugel oder in Form eines hohlen Kegelstumpfes ausgebildet sein, die zudem an einen Zylinder anschließen können, wobei das Radom und der Zylinder gemeinsam die Vorrichtung zur Niederschlagsmessung, inklusive der unten beschriebenen Signalverarbeitungseinheit, umschließen. Dabei kann der Zylinder konisch ausgebildet sein. Die Radarwellen treten durch den Kegelstumpf durch. Damit ist sichergestellt, dass durch das Radom der ebene Charakter der Wellenfront erhalten bleibt. Das Radom ist aus einem für die ausgesendeten Radarwellen durchlässigen, im Wesentlichen verlustfreien Material gebildet. Das Radom schützt einerseits die darunter liegende Antenne, die dielektrische Linse und Elektronik vor Feuchtigkeit und Verschmutzungen, bildet andererseits die Auftrefffläche für die Regentropfen.

Die Vorrichtung kann weiterhin einen Ringkoppler zum Entkoppeln von Empfangs- und Sendesignalen umfassen. Da zum Senden und Empfangen der Radarwellen eine einzige Antenne verwendet wird, sind bei der erfindungsgemäßen Vorrichtung zur Niederschlagsmessung der Sende- und Empfangspfad gekoppelt. Durch Verwendung eines Ringkopplers, auch Rat-Race-Kopplers, lässt sich durch Interferenz das Empfangssignal von dem kombinierten Empfangs-und Sendesignal am Anschluss der monostatischen Antenne durch Überlagerung mit dem Sendesignal trennen.

Gemäß einer Weiterbildung kann die erfindungsgemäße Vorrichtung weiterhin eine Signalverarbeitungseinheit zum Verarbeiten von Hochfrequenzsignalen umfassen, die dazu ausgebildet ist, ein Sendesignal für die Antenne zu erzeugen und eine Dopplerverschiebung auf der Grundlage eines Empfangssignals der Antenne zu bestimmen. Das Sendesignal kann dabei kontinuierlich bei Verwendung der Vorrichtung als Dauerstrichradarsensor oder gepulst bei Verwendung der Vorrichtung als Pulsradarsensor sein. Zudem kann das Sendesignal unmoduliert sein (CW - continuous wave). Insbesondere können Antenne und Signalverarbeitungseinheit derart ausgebildet sein, dass sie ein kohärentes Radiosignal zur Messung der Dopplerverschiebung aussenden. Aus der Änderung der Frequenz zwischen ausgesendetem Signal und empfangenem Signal kann die Signalverarbeitungseinheit die Dopplerverschiebung bestimmen.

Signalgeneratoren für Radarantennen sind im Stand der Technik allgemein bekannt. Dabei kann die Signalerzeugung insbesondere mit Hilfe eines Aufwärtsmischers erfolgen, welcher eine Hilfsfrequenz mit einer Zwischenfrequenz kombiniert, um die gewünschte Hochfrequenz zur Abstrahlung durch die Antenne zu erzeugen. Äquivalent kann die Signalverarbeitungseinheit einen Abwärtsmischer aufweisen, welcher die empfangene Hochfrequenz mit der Hilfsfrequenz des Lokaloszillators kombiniert, um die Empfangsfrequenz auf eine tiefere, und damit leichter zu verarbeitende, Zwischenfrequenz umzusetzen.

Die Signalverarbeitungseinheit kann zudem dazu ausgebildet sein, nach dem I/Q-Verfahren (inphase und quadrature Verfahren) die Phaseninformation aus dem empfangenen Radarsignal zu bestimmen. Hierzu kann die Signalverarbeitungseinheit eine MTI (moving target indication) Schaltung aufweisen. Aus der zeitlichen Änderung der Phaseninformation kann dann ebenfalls die Dopplerverschiebung berechnet werden. Da es sich bei der erfindungsgemäßen Vorrichtung zur Niederschlagsmessung um ein monostatisches Radarsystem handelt, können beide Verfahren zur Bestimmung der Dopplerverschiebung gleichermaßen angewendet werden.

Die Signalverarbeitungseinheit kann zudem weitere Elemente, wie Analog-Digital-Wandler, Digital-Analog-Wandler, weitere Mischer, einen Digitalsignalprozessor und/oder weitere im Stand der Technik bekannte Elemente aufweisen. Die Signalverarbeitungseinheit kann auch differenzielle I-Q Signale aus dem Sendesignal und dem empfangenen Signal erzeugen.

Gemäß einer weiteren Weiterbildung kann die Signalverarbeitungseinheit weiterhin dazu ausgebildet sein, aus der Dopplerverschiebung und einer Korrelation von Geschwindigkeit und Größe von Regentropfen eine Niederschlagsmenge zu bestimmen. Hierzu kann die Signalverarbeitungseinheit eine Speichereinheit aufweisen oder mit einer solchen verbunden sein, in der die Korrelation von Geschwindigkeit und Größe von Regentropfen beispielsweise in Form einer Tabelle gespeichert ist. Die Geschwindigkeit der Regentropfen kann mittels der Signalverarbeitungseinheit anhand bekannter Gesetze aus der Dopplerverschiebung und der bekannten Frequenz des emittierten Primärsignals bestimmt werden. Die Geschwindigkeit kann auch direkt aus der oben beschriebenen zeitlichen Änderung der Phaseninformation bestimmt werden. Entsprechend kann die oben beschriebene Signalverarbeitungseinheit dazu ausgebildet sein, die Geschwindigkeit der Regentropfen unmittelbar auf der Grundlage eines Empfangssignals der Antenne zu bestimmen.

Gemäß einer Weiterbildung kann die Signalverarbeitungseinheit eine monolithische integrierte Mikrowellenschaltung (MMIC) aufweisen. Dabei können alle aktiven und passiven Komponenten der verwendeten Hochfrequenzschaltkreise auf einem Halbleitersubstrat realisiert werden. Die monolithische integrierte Mikrowellenschaltung kann beispielsweise in Form eines Doppelgegentaktmischers mit Feldeffekttransistoren, einer sog. Gilbert-Zelle, ausgeführt werden. Neben der besonders kompakten Bauart der monolithischen integrierten Mikrowellenschaltung gestattet eine solche Gilbert-Zelle die Unterdrückung des AM-Rauschens des Lokaloszillators und gewährt zudem eine gute Isolation der Tore der Zelle. Darüber hinaus werden keine verteilten Schaltungselemente benötigt. Eine MMIC Realisierung für differenzielle Signalführung ist besonders einfach und platzsparend.

Die dielektrische Linse ist mit ihrer optischen Achse im Wesentlichen in Richtung der Gravitationskraft ausgerichtet. Dies ist insbesondere dann von Vorteil, wenn die Antenne wie oben beschrieben in einem Brennpunkt der dielektrischen Linse angeordnet ist und mit einer Symmetrieachse des emittierten Radarwellenfeldes entlang der optischen Achse ausgerichtet ist. In diesem Fall wird aufgrund der weitgehend ebenen Wellenfront nach Durchtritt durch die dielektrische Linse stets die vertikale Geschwindigkeitskomponente der Regentropfen in voller Größe gemessen, selbst wenn die Tropfen am Rand des Radoms aufschlagen. Diese Unabhängigkeit vom Ort des Auftreffens der Regentropfen ergibt sich aus der Antiparallelität von vertikaler Geschwindigkeitskomponente zur Ausbreitungsrichtung der ebenen Wellenfront.

Des Weiteren bewirkt die weitgehend ebene Wellenfront, dass die horizontale, durch Windeinfluss verursachte Geschwindigkeitskomponente der Regentropfen nicht, bzw. nur in stark verminderter Form, gemessen wird. Die Eliminierung des Einflusses des Windes ergibt sich dabei aus der Orthogonalität der horizontalen Geschwindigkeitskomponente zur Ausbreitungsrichtung der ebenen Wellenfront.

Die vorliegende Offenbarung stellt auch eine beispielhafte und nicht beanspruchte Vorrichtung zu Niederschlagsmessung mittels Radar mit einer Antenne zur Verfügung, die dazu ausgebildet ist, Radarwellen zu senden und zu empfangen, wobei die Antenne ein zweidimensionales Array von Patchantennen umfasst, die derart angeordnet sind, dass von der Antenne im Fernfeld im Wesentlichen ebene Wellenfronten ausgesendet werden können. Insbesondere kann die Antenne ein Array aus NxM identisch ausgebildeten Patchantennen aufweisen, wobei N≥10 und M≥10 sind. Die Antennen können in einem regelmäßigen Feld, d.h. mit konstantem Abstand, angeordnet sein. Ein solches zweidimensionales Array von Patchantennen hat eine hohe Richtcharakteristik mit vernachlässigbaren Seitenkeulen.

Bei geeigneter Wahl der Amplitude und der Phase der einzelnen Steuerströme für die Antennen des Arrays wird von einem solchen zweidimensionalen Array von Patchantennen nach Interferenz, d.h. im Fernfeld, eine zumindest über den Ausbreitungsbereich des Antennenfeldes im Wesentlichen ebene Wellenfront ausgesendet. Mittels eines zweidimensionalen Arrays von in einer Ebene angeordneten Patchantennen kann somit auch ohne Verwendung einer dielektrischen Linse eine im Wesentlichen ebene Wellenfront erzeugt werden, was wie oben beschrieben zu einer präziseren Messung der Geschwindigkeit fallender Regentropfen führt. Anders als bei den oben beschriebenen Vorrichtungen findet gemäß diesem Beispiel jedoch keine Fokussierung der reflektierten Radarwellen statt, sodass bei diesem Beispiel ein geringeres Signal-Rausch-Verhältnis vorliegt.

Das zweidimensionale Array von Patchantennen kann mit jeder der oben genannten Weiterbildungen kombiniert werden, die nicht explizit die Anwesenheit der dielektrischen Linse erfordert.

Die beschriebenen Vorrichtungen können als Teil eines Systems zur Niederschlagsmessung an einem festen Ort, z. B. an einer Autobahn oder im Regenwald, installiert werden. Dabei wird die oben erwähnte optische Achse der dielektrischen Linse in Richtung der Gravitationskraft ausgerichtet. Die beschriebenen Niederschlagssensoren können zudem mit einem Speicher zur Speicherung der gemessenen Niederschlagsmengen und/oder eine Sendevorrichtung zum Übermitteln der gemessenen Niederschlagsmengen an eine zentrale (Wetter-)Station ausgestattet sein.

Die oben genannten Aufgaben werden auch durch ein Verfahren zur Bestimmung einer Geschwindigkeit von Regentropfen mittels Radar nach einem der Ansprüche 6-8, gelöst, welches im Wesentlichen die folgenden Schritte umfasst: Abstrahlen eines Radarsignals mittels einer Antenne; Empfangen eines reflektierten Radarsignals mittels der Antenne; und Bestimmen der Geschwindigkeit der Regentropfen auf der Grundlage des empfangenen reflektierten Radarsignals; wobei eine dielektrische Linse derart vor der Antenne angeordnet ist, dass das abgestrahlte Radarsignal durch die dielektrische Linse hindurchtritt.

Hierbei können dieselben Variationen und Weiterbildungen, die oben im Zusammenhang mit der erfindungsgemäßen Vorrichtung zur Niederschlagsmessung beschrieben wurden, auch auf das Verfahren zur Niederschlagsmessung angewendet werden. Insbesondere kann die Antenne als einzelne Patchantenne oder als Patchantenne mit einem 1x2 Patch-Array ausgebildet sein. Die dielektrische Linse kann zum Schutz vor Verschmutzungen teilweise von einem Radom umschlossen sein. Die dielektrische Linse kann derart ausgebildet und relativ zur Antenne angeordnet sein, dass von der Antenne abgestrahlte Wellenfronten des Radarsignals bei Durchtritt durch die dielektrische Linse in im Wesentlichen ebene Wellenfronten umgeformt werden. Das abgestrahlte Radarsignal kann eine kontinuierliche Radarwelle mit einer konstanten, vorgegebenen Frequenz oder ein auf eine Trägerwelle aufmoduliertes Hochfrequenzsignal mit vorgegebener Frequenz sein. Das Radarsignal kann zudem ein gepulstes Signal sein. Wie oben beschrieben kann die Antenne in einem Brennpunkt der dielektrischen Linse angeordnet und mit einer zentralen Achse der Emissionscharakteristik entlang der optischen Achse der dielektrischen Linse ausgerichtet sein. Dadurch entstehen nach Durchtritt durch die dielektrische Linse ebene Wellenfronten, welche parallel zu den Hauptebenen der dielektrischen Linse ausgerichtet sind und sich senkrecht zu diesen ausbreiten.

Gemäß einer Weiterbildung kann das Verfahren weiterhin das Bestimmen der Niederschlagsmenge auf der Grundlage der bestimmten Geschwindigkeit umfassen. Wie oben beschrieben, kann zur Bestimmung der Geschwindigkeit der Regentropfen das empfangene Radarsignal abwärtsgemischt und nach dem I/Q-Verfahren bearbeitet werden, um die Phaseninformation des Signals zu bestimmen. Aus der zeitlichen Variation der Phaseninformation kann dann die Geschwindigkeit der reflektierenden Regentropfen berechnet werden. Alternativ kann die Dopplerverschiebung aus dem Vergleich der Frequenzen von Empfangs- und Sendesignal bestimmt werden, aus der unter Kenntnis der Frequenz des Sendesignals die Relativgeschwindigkeit bestimmt werden kann. Hierbei ist zu berücksichtigen, dass der Dopplereffekt aufgrund der Reflexion des Radarsignals an den Regentropfen zweimal auftritt.

Gemäß einer Weiterbildung kann das Bestimmen der Geschwindigkeit der Regentropfen ein Trennen des abgestrahlten Radarsignals und des reflektierten Radarsignals mittels eines Ringkopplers umfassen. Auf diese Weise lassen sich Sende- und Empfangspfad problemlos kombinieren. Das Empfangssignal kann wie oben beschrieben mittels einer Signalverarbeitungseinheit, beispielsweise mit einer monolithischen integrierten Mikrowellenschaltung, verarbeitet werden, um die Geschwindigkeit der Regentropfen und daraus deren Durchmesser zu bestimmen. Hierzu kann eine Korrelation zwischen Geschwindigkeit und Durchmesser der Regentropfen aus einer Speichereinheit ausgelesen oder als funktioneller Zusammenhang ausgewertet werden. Aus dem Durchmesser der Regentropfen, die auf das Radom auftreffen, und der Querschnittsfläche des Radoms kann dann die Niederschlagsmenge bestimmt werden. Die einzelnen Bestimmungsschritte können dabei von der Signalverarbeitungseinheit und/oder einer separaten Prozessoreinheit durchgeführt werden.

Die beschriebenen Vorrichtungen und Verfahren gestatten eine präzise und zuverlässige Bestimmung der Niederschlagsmenge, wobei verfälschende Einflüsse von Wind und Ort des Auftreffens der Regentropfen eliminiert werden. Das Niederschlagsradar ist zudem äußerst kompakt und kann daher einfach und platzsparend an unterschiedlichsten Orten eingesetzt werden.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

Kurzbeschreibung der Figuren

Figuren 1A-C zeigen exemplarisch die auftretenden verfälschenden Einflüsse auf die gemessene Geschwindigkeit von Regentropfen bei Verwendung eines bistatischen Radarsensors des Stands der Technik.

Figur 2 zeigt schematisch eine beispielhafte Ausführung einer Vorrichtung zur Niederschlagsmessung gemäß der vorliegenden Erfindung.

**Detaillierte Beschreibung**

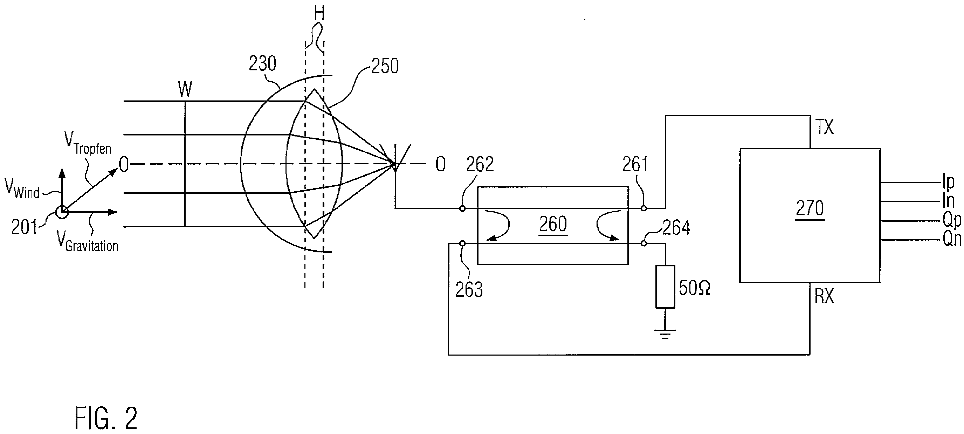

Die Figur 2 zeigt schematisch eine beispielhafte Ausführung einer Vorrichtung zur Niederschlagsmessung mittels Radar gemäß der vorliegenden Erfindung. Die Figur zeigt die Vorrichtung zu Darstellungszwecken auf der Seite liegend. Bevorzugt kann die Vorrichtung jedoch derart ausgerichtet sein, dass die optische Achse O der dielektrischen Linse 250 wie in der Figur durch die Geschwindigkeitskomponente $v_{Gravitation}$ angedeutet in Richtung der Gravitationskraft ausgerichtet ist, wie dies bei einem fest installierten Niederschlagsradar erstrebenswert ist. Darüber hinaus zeigt die Figur den Ringkoppler 260 und die monolithische integrierte Mikrowellenschaltung 270 in stark vergrößerter Form. Es versteht sich jedoch, dass der Ringkoppler 260, die MMIC 270 und weitere benötigte Elemente gemeinsam mit der dielektrischen Linse 250 und der Patchantenne 240 in einem von dem Radom 230 verschlossenen Zylinder (nicht dargestellt) als kompaktes Bauteil untergebracht werden können.

Wie oben beschrieben ist bei der erfindungsgemäßen Vorrichtung eine dielektrische Linse 250 zwischen dem Radom 230 und der Antenne 240 angeordnet, wobei die Antenne 240 gleichzeitig zum Senden und Empfangen von Radarsignalen dient. In der hier dargestellten, nicht limitierenden Weiterbildung ist die Patchantenne 240 in einem Brennpunkt der dielektrischen Linse 250 angeordnet. Die Antenne 240 kann jedoch auch in einem anderen Punkt der Fokalebene der dielektrischen Linse angeordnet sein. In diesem Fall breitet sich die ebene Wellenfront nach Durchtritt durch die dielektrische Linse schräg zur optischen Achse aus.

Wie in der Figur 2 gezeigt, ist die dielektrische Linse 250 derart ausgebildet und bezüglich der Antenne 240 angeordnet, dass von der Antenne 240 abgestrahlte, sphärische Wellenfronten nach Durchgang durch die dielektrische Linse in ebene Wellenfronten W umgeformt werden. Die ebenen Wellenfronten W breiten sich parallel zu den Hauptebenen H der dielektrischen Linse 250 aus. Anders ausgedrückt werden parallele Radarstrahlen beim Durchgang durch die dielektrische Linse 250 auf der Patchantenne 240 fokussiert. Somit treffen die von der Antenne 240 abgestrahlten Radarsignale als parallele Strahlen auf die fallenden Regentropfen 201. Bei Ausrichtung der optischen Achse O der dielektrischen Linse 250 in Richtung der Gravitationskraft trägt somit nur die Fallgeschwindigkeit $v_{Gravitation}$ der Regentropfen 201 aufgrund der Gravitation zur Dopplerverschiebung bei Reflexion der Radarsignale an den Regentropfen bei. Die durch einen eventuellen Windeinfluss verursachte Horizontalkomponente $v_{Wind}$ der Gesamtgeschwindigkeit $v_{Tropfen}$ der Regentropfen hat auf die Dopplerverschiebung der zur Patchantenne 240 zurück reflektierten Radarsignale keinen Einfluss.

Da die abgestrahlte Radarwelle sich nach Durchtritt durch die dielektrische Linse in Form ebener Wellenfronten ausbreitet, werden umgekehrt auch die von den Regentropfen reflektierten Radarsignale als parallele Strahlen zur dielektrischen Linse 250 zurück reflektiert, welche die Strahlen wie in der Figur 2 gezeigt auf die Patchantenne 240 fokussiert. Als Ergebnis der ebenen Wellenfronten wird einerseits die gemessene Geschwindigkeit nicht mehr durch den Ort, an dem der jeweilige Regentropfen 201 auf das Radom 230 aufschlägt, beeinflusst. Andererseits bewirkt die Fokussierung der reflektierten Radarsignale eine Verbesserung des Signal-zu-Rausch-Verhältnisses.

Das zu emittierende Radarsignal TX wird in der hier dargestellten, nicht limitierenden Weiterbildung mittels einer monolithischen integrierten Mikrowellenschaltung (MMIC) 270 erzeugt und auf ein erstes Tor 261 des Ringkopplers 260 gelegt. Da bei dem dargestellten monostatischen Niederschlagradar lediglich eine einzige Patchantenne 240 zum Senden und Empfangen verwendet wird, müssen das Primärsignal TX und das empfangene Sekundärsignal RX, die gleichzeitig am Tor 262 vorliegen, entkoppelt werden. Dies geschieht mit Hilfe des Ringkopplers 260, an dessen Tor 263 somit das empfangene Sekundärsignal RX durch Interferenz ausgekoppelt wird. Das ausgekoppelte Sekundärsignal RX wird anschließend zur weiteren Verarbeitung an einen Eingang der MMIC 270 weitergeleitet. Das vierte Tor 264 des Ringkopplers 260 wird nicht benötigt und kann wie in der Figur 2 gezeigt auf einen 50 Ω Massenanschluss gelegt werden. Es versteht sich jedoch, dass die gezeigte Ausführung dieses Anschlusses nur eine exemplarische Weiterbildung darstellt, die je nach Anforderungen an die Hochfrequenzschaltung angepasst werden kann.

Wie oben beschrieben kann das empfangene Sekundärsignal RX, allein oder unter Berücksichtigung des Primärsignals TX, von der Signalverarbeitungseinheit 270 verarbeitet werden. Dabei kann aus dem Sekundärsignal RX insbesondere die Phaseninformation bestimmt werden, wie es durch die differentiellen Signalausgänge in der Figur angedeutet ist. Für eine analoge Signalverarbeitung können die differentiellen Signale verwendet werden, da diese unempfindlich gegenüber Gleichtaktstörungen sind. Weiterhin ist das Signal-zu-Rausch-Verhältnis (SNR) der differentiellen Signale (z.B. Ip-In), die vom MMIC ohnehin bereitgestellt werden, größer als das SNR eines einzelnen Signals (z.B. nur Ip). Aus der zeitlichen Variation der Phaseninformation des Sekundärsignals kann die Geschwindigkeit $v_{Gravitation}$ der Regentropfen unmittelbar bestimmt werden. Alternativ kann aus der Dopplerverschiebung, die durch Frequenzvergleich des Sekundärsignals mit dem Primärsignal bestimmt werden kann, die Geschwindigkeit $v_{Gravitation}$ der Regentropfen indirekt bestimmt werden. In beiden Fällen ist zu berücksichtigen, dass aufgrund der Reflexion der ausgestrahlten Radarwelle eine Verdoppelung des Effekts auftritt. Die für die Umrechnung der Dopplerverschiebung in eine Geschwindigkeit $v_{Gravitation}$ benötigten Daten können in einer Speichereinheit, z. B. einem Flash-Speicher (nicht dargestellt), gespeichert sein und von der MMIC 270 oder einer separaten Prozessoreinheit (nicht dargestellt) ausgelesen werden.

Aus der bestimmten Geschwindigkeit der Regentropfen kann über die Korrelation zwischen Geschwindigkeit und Durchmesser von Regentropfen die Niederschlagsmenge bestimmt werden. Wird die Niederschlagsmenge in einem vorgegebenen Zeitintervall, beispielsweise 15 Sekunden, in regelmäßigen Abständen, beispielsweise 1 Minute, bestimmt, so kann die zeitliche Variation der Niederschlagsmenge pro Zeiteinheit bestimmt werden. Die für die Korrelation benötigten Daten können ebenfalls in der Speichereinheit abgelegt sein. Die erforderlichen Algorithmen können von der Prozessoreinheit ausgeführt werden.

Die dargestellte Ausbildung eines Niederschlagsradars mit dielektrischer Linse und monostatischer Antenne umgeht alle Nachteile eines bistatischen Niederschlagsradars und ermöglicht eine kompakte und zuverlässige Bestimmung der Niederschlagsmenge.

**Patentansprüche**

1. Vorrichtung zur Niederschlagsmessung mittels Radar, mit
   einer Patchantenne (240), die dazu ausgebildet ist, Radarwellen zu senden und zu empfangen; und
   einer dielektrischen Linse (250);
   wobei die Patchantenne derart zur dielektrischen Linse ausgerichtet ist, dass von der Patchantenne abgestrahlte Radarwellen durch die dielektrische Linse hindurchtreten,
   wobei die dielektrische Linse (250) derart ausgebildet und relativ zur Patchantenne (240) ausgerichtet ist, dass von der Patchantenne abgestrahlte Wellenfronten bei Durchtritt durch die dielektrische Linse in im Wesentlichen ebene Wellenfronten umgeformt werden, dass die Patchantenne (240) in einem Brennpunkt der dielektrischen Linse (250) angeordnet ist oder zwischen der Patchantenne (240) und der dielektrischen Linse (250) ein Rundhohlleiter angeordnet ist;
   dass die dielektrisch Linse (250) mit ihrer optischen Achse im Wesentlichen in Richtung der Gravitationskraft ausgerichtet ist; und
   dass die Vorrichtung weiterhin ein Radom (230) umfasst, welches auf der antennenfernen Seite der dielektrischen Linse (250) angeordnet ist und die dielektrische Linse teilweise umhüllt.

2. Vorrichtung nach Anspruch 1, **dadurch gekennzeichnet, dass** sie einen Ringkoppler (260) zum Entkoppeln von Empfangs- und Sendesignalen umfasst.

**3.** Vorrichtung nach einem der vorhergehenden Ansprüche, **dadurch gekennzeichnet, dass** sie eine Signalverarbeitungseinheit (270) zum Verarbeiten von Hochfrequenzsignalen umfasst, die dazu ausgebildet ist, ein Sendesignal für die Patchantenne zu erzeugen und eine Dopplerverschiebung auf der Grundlage eines Empfangssignals der Patchantenne zu bestimmen.

**4.** Vorrichtung nach Anspruch 3, **dadurch gekennzeichnet, dass** die Signalverarbeitungseinheit (270) weiterhin dazu ausgebildet ist, aus der Dopplerverschiebung und einer Korrelation von Geschwindigkeit und Größe von Regentropfen (201) eine Niederschlagsmenge zu bestimmen.

**5.** Vorrichtung nach Anspruch 3 oder 4, **dadurch gekennzeichnet, dass** die Signalverarbeitungseinheit (270) eine monolithische integrierte Mikrowellenschaltung aufweist.

**6.** Verfahren zur Bestimmung einer Geschwindigkeit von Regentropfen mittels Radar, mit den folgenden Schritten:

Abstrahlen eines Radarsignals mittels einer Patchantenne (240);
Empfangen eines reflektierten Radarsignals mittels der Patchantenne (240); und
Bestimmen der Geschwindigkeit der Regentropfen auf der Grundlage des empfangenen reflektierten Radarsignals;
**dadurch gekennzeichnet, dass** das Verfahren mittels einer Vorrichtung nach einem der Ansprüche 1 -5 durchgeführt wird.

**7.** Verfahren nach Anspruch 6, weiterhin das Bestimmen einer Niederschlagsmenge auf der Grundlage der bestimmten Geschwindigkeit der Regentropfen umfassend.

**8.** Verfahren nach einem der Ansprüche 6-7, wobei das Bestimmen der Geschwindigkeit der Regentropfen (201 ; 301) ein Trennen des abgestrahlten Radarsignals und des reflektierten Radarsignals mittels eines Ringkopplers (260) umfasst.

## Claims

**1.** An apparatus for measuring precipitation by means of radar, with
a patch antenna (240) configured to transmit and receive radar waves, and
a dielectric lens (250);
wherein the patch antenna is oriented toward the dielectric lens in such a way that radar waves emitted by the patch antenna pass through the dielectric lens; wherein the dielectric lens (250) is configured as such and oriented relative toward the patch antenna (240) that wavefronts emitted by the patch antenna are formed into essentially plane wavefronts when passing through the dielectric lens;
that the patch antenna (240) is arranged in a focal point of the dielectric lens (250) or a circular waveguide is arranged between the patch antenna (240) and the dielectric lens (250);
that the dielectric lens (250) is oriented with its optical axis essentially in the direction of the gravitational force; and
that the apparatus furthermore comprises a radome (230), which is arranged on the antenna-remote side of the dielectric lens (250) and partially encloses the dielectric lens.

**2.** The apparatus according to claim 1, **characterised in that** it comprises a rat-race coupler (260) for decoupling reception and transmission signals.

**3.** The apparatus according to one of the preceding claims, **characterised in that** it comprises a signal processing unit (270) for processing high frequency signals that are configured to generate a transmission signal for the patch antenna and to determine a Doppler shift based on a reception signal of the patch antenna.

**4.** The apparatus according to claim 3, **characterised in that** the signal processing unit (270) furthermore is configured to determine an amount of precipitation from the Doppler shift and a correlation of speed and size of raindrops (201).

**5.** The apparatus according to claim 3 or 4, **characterised in that** the signal processing unit (270) has a monolithically integrated microwave circuit.

**6.** A method for determining a speed of rain drops by means of radar, with the following steps:

emitting a radar signal by means of a patch antenna (240);
receiving a reflected radar signal by means of the patch antenna (240); and
determining the speed of the raindrops based on the received reflected radar signal;
**characterised in that** the method is executed by means of an apparatus according to one of the claims 1-5.

7. The method according to claim 6, furthermore comprising determining an amount of precipitation based on the determined speed of the raindrops.

8. The method according to one of the claims 6-7, wherein determining the speed of the raindrops (201; 301) comprises separating the emitted radar signal and the reflected radar signal by means of a rat-race coupler (260).

## Revendications

1. Dispositif de mesure de précipitations au moyen d'un radar, avec
une antenne patch (240), qui est conçue pour émettre et recevoir des ondes radar; et
une lentille diélectrique (250) ;
dans lequel l'antenne patch est orientée vers la lentille diélectrique de sorte que des ondes radar émises par l'antenne patch passent à travers la lentille diélectrique,
dans lequel la lentille diélectrique (250) est conçue et orientée par rapport à l'antenne patch (240) de sorte que des fronts d'ondes émis par l'antenne patch sont transformés en fronts d'ondes essentiellement planes lors de leur passage à travers la lentille diélectrique, que l'antenne patch (240) est agencée sur le foyer de la lentille diélectrique (250) ou un guide d'ondes circulaire est agencé entre l'antenne patch (240) et la lentille diélectrique (250) ;
que la lentille diélectrique (250) est orientée avec son axe optique essentiellement dans la direction de la force gravitationnelle; et
que le dispositif comprend aussi un radôme (230), qui est agencé du côté éloigné de l'antenne de la lentille diélectrique (250) et qui enveloppe partiellement la lentille diélectrique.

2. Dispositif selon la revendication 1, **caractérisé en ce qu'**il comprend un coupleur en anneau (260) pour découpler les signaux d'émission et de réception.

3. Dispositif selon l'une des revendications précédentes, **caractérisé en ce qu'**il comprend une unité de traitement des signaux (270) pour traiter les signaux de haute fréquence, qui est conçue pour produire un signal d'émission pour l'antenne patch et pour déterminer un décalage Doppler sur la base d'un signal de réception de l'antenne Patch.

4. Dispositif selon la revendication 3, **caractérisé en ce que** l'unité de traitement des signaux (270) est aussi conçue pour déterminer une quantité de précipitations à partir du décalage Doppler et d'une corrélation de la vitesse et de la taille des gouttes de pluie (201).

5. Dispositif selon la revendication 3 ou 4, **caractérisé en ce que** l'unité de traitement des signaux (270) comporte un circuit intégré monolithique hyperfréquence.

6. Procédé pour déterminer une vitesse des gouttes de pluie au moyen d'un radar, avec les étapes suivantes :

émettre un signal radar au moyen d'une antenne patch (240) ;
recevoir un signal radar réfléchi au moyen de l'antenne patch (240) ; et
déterminer la vitesse des gouttes de pluie sur la base du signal radar réfléchi reçu;
**caractérisé en ce que** le procédé est exécuté au moyen d'un dispositif selon l'une des revendications 1-5.

7. Procédé selon la revendication 6, comprenant aussi la détermination d'une quantité de précipitations sur la base de la vitesse déterminée des gouttes de pluie.

8. Procédé selon l'une des revendications 6-7, dans lequel la détermination de la vitesse des gouttes de pluie (201; 301) comprend une séparation du signal radar émis et du signal radar réfléchi au moyen d'un coupleur en anneau (260).

FIG. 1A

101

$\alpha_{TX}$  $\alpha_{RX}$

130

$V_{Tropfen}$

110  120

FIG. 1B

Wind

102

$V_{Wind}$

$V_{Tropfen}$

130

$V_{Gravitation}$

110  120

103

$V_{Tropfen}$

FIG. 1C

$\alpha_{TX}$  $\alpha_{RX}$

130

110  120

FIG. 2

EP 3 529 862 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007074943 A
- WO 2013055272 A

- US 2005093738 A

**In der Beschreibung aufgeführte Nicht-Patentliteratur**

- A FM-CW microwaveradar for rainfall applications. *Master Thesis,* 31. Mai 2012, http://ir.uio-wa.edu/cqi/viewcontent.cqi

- A Robust Microwave Rain Gauge. **MANSHEIM T J et al.** IEEE TRANSACTIONS ON INSTRUMENTATION AND MEASUREMENT. IEEE SERVICE CENTER, 01. August 2010, vol. 59, 2204-2210